# EUROPEAN PATENT APPLICATION

(11) **EP 4 786 022 A1**
(43) Date of publication of application: **05.08.2026**
(21) Application number: 25150763.8
(22) Date of filing: 08.01.2025
(51) Int. Cl.: A63F 13/23, A63F 13/24

(54) **MODULAR GAME CONTROLLER WITH INTEGRATED POINTING DEVICE**

(71) Applicant: Hacikadiroglu, Necati, 34335 Besiktas/Istanbul (TR)
(72) Inventor: Hacikadiroglu, Necati, 34335 Besiktas/Istanbul (TR)
(74) Representative: Flach Bauer & Partner Patentanwälte mbB

(57) **Abstract**

The present invention relates to modular game controller 10 for video gaming and its parts 100, 200 as well as to a game console system including said modular game controller. The game controller 10 comprising a first part 100 and a second part 200, being configured to mechanically couple to each other so as to be operable in a unified mode. Further the first part 100 and second part 200 can be split from another to be operable in a split mode. The first part 100 includes at least one user input component and is configured to be used as a one hand operated gaming controller in split mode. The second part 200 includes a mouse sensor 260 and is configured to be used as a pointing device in split mode. The mouse sensor is positioned so as to be able to detect a surface being opposite to a second joint surface A₂₀₀ of the second part.

## Description

### Technical Field

The present invention relates to a game controller for video gaming and in particular to a modular game controller and its parts. The modular game controller includes at least two parts, which can be operated in a unified mode (two-handed control) and in a split mode, providing a one-hand operated game controller (first part) and a pointing device (second part)

### Background

Video games occupy a significant place in the world of digital entertainment, offering an appealing option for people of all ages. With advancing technology, the gaming industry continuously innovates to enrich user experiences and make interactions more immersive. A crucial part of the gaming experience is the game controllers.

Traditional two hand operated game controllers typically provide basic control through a series of buttons, analog sticks, and triggers. While these controllers suffice for most game genres, they often fall short in high-precision scenarios, such as first-person shooter (FPS), strategy, and fast-reflex games. Since using a pointing device, such as a mouse, offers faster and more precise aiming, many players prefer a mouse and keyboard setup for video gaming.

While mouse and keyboard use provide precision in games, it also has some drawbacks. Firstly, the need for a desktop setup can cause comfort issues during long gaming sessions. Gaming consoles are usually played in living rooms in front of a TV or screen while sitting on a sofa or armchair. To play with a mouse and a keyboard while sitting on a sofa or armchair, one would need to place a table wider than shoulder width in front of the sofa/armchair. This table not only causes players to sit in an awkward, non-ergonomic posture for long periods but also hinders movement during long gaming sessions, such as standing up e.g. to grab something from the kitchen.

In situations where multiple people take turns playing, moving the mouse, keyboard, and table to the front of another seat in the living room becomes a significant inconvenience.

Game controllers, on the other hand, are roughly the size of a large TV remote, held with two hands, and do not require a table. Therefore, they cause no discomfort when standing up, sitting down, or handing them over to another person.

However, the pointing devices (mice) are unrivaled in control, particularly in high-precision gaming scenarios. The control provided by a pointing device for aiming, target tracking, and quick response is superior to that of game controllers. Many players wish to experience the precision offered by a mouse in console games without losing the advantages provided by game controllers.

### Description of the invention

In view of the above, it is an object of the present invention to provide a game controller overcoming at least some of the aforementioned drawbacks. Particularly, the inventive game controller is flexible due to a modular design and is ergonomic.

The object is achieved by a modular game controller according to claim 1, a pointing device according to claim 13, a one hand operated game controller according to claim 14 and by a game console system according to claim 15.

In particular, the object is achieved by a modular game controller for video gaming. The game controller comprises a first part and a second part.

The first part includes a first coupling means and a first joint face being assigned to the first coupling means. The second part includes a second, corresponding coupling means and a second joint face being assigned to the second coupling means.

The first and second coupling means are configured to mechanically couple the first part to the second part along the first and second joint faces. In other words, the first joint face covers the second joint face at least partially, in case the first and second parts are coupled. Likewise, the second joint face covers the first joint face at least partially, in case the first and second parts are coupled.

The first and second joint faces may have the same size. In this case they may cover each other completely, in case the first and second parts are coupled. Alternatively, they can also be offset so that the opposing coverage is only partial. Further, the first joint face may be larger or smaller than the second joint face.

In case the first and second coupling means mechanically couple the first part to the second part, the first part and the second part are operable in a unified mode. In other words, in unified mode, the first and second part are fixedly connected to one another, allowing the game controller to be used e.g. in a two-hand operated mode. The first part may be assigned to a left hand of the user and the second part to a right hand of the user. It is to be understood, that the assignment could be inverted.

For operating the game controller in a split mode, the first coupling means and the second coupling means can be decoupled so that the first part and the second part are split from another.

The first part includes at least one user input component (e.g. a key, button, trigger, and/or the like) and is configured to be used as a one hand operated game controller in split mode. Particularly, the first part could be placed on a surface (e.g. a tabletop, an armrest, a body part of the user, such as a thigh, and/or the like) and used keyboard-like. Likewise, the first part could be a hand-held one hand operated game controller in split mode.

The second part includes a mouse sensor and is configured to be used as a pointing device, particularly as a mouse, in split mode.

The mouse sensor is positioned on the second part so as to be able to detect a surface being opposite to the second joint surface.

The mouse sensor is configured to track its movement (respectively the movement of the second part) across said surface. It converts physical motion into digital signals that can be interpreted e.g. as cursor movement on a screen. Using the second part as a pointing device, allows players to achieve faster and more precise control during actions such as aiming and shooting.

The mouse sensor may be an optical sensor, a laser sensor, and/or the like. The optical sensor may include a light source, such as an LED, to illuminate the surface. An optical detection unit (e.g. a camera) captures the reflected light emitted by the light source. Changes between successively captured images, can be used to calculate a direction and speed of the sensor's movement. In laser sensors, a laser is used as a light source. Lasers provide for an improved tracking, particularly on glossy and/or uneven surfaces.

According to the intended use of the second part in split mode (i.e. as pointing device), the second part is oriented so that the second joint surface faces a surface to be tracked (e.g. a tabletop, an armrest, a body part of the user, such as a thigh, and/or the like). This results in an ergonomic using position.

In split mode, the second joint surface may be in contact with the surface to be tracked or in close proximity. For example, gliding elements or a gliding surface area may be provided on the second joint surface, so as to improve the gliding of the second part on the surface to be tracked.

As the mouse sensor is able to detect a surface being opposite to the second joint surface, it may be positioned on the second joint surface. In unified mode, the mouse sensor may be covered or uncovered by the first joint surface. Alternatively, the mouse sensor may be positioned next to the second joint surface.

In an aspect, the mouse sensor may be positioned on the second part (particularly the second joint surface) so as to be covered by the first part (particularly the first joint surface), when the first part and the second part are mechanically coupled to one another (i.e. in unified mode). Thus, in unified mode, the mouse sensor can be protected from contamination and damaging.

The present invention achieves an ergonomic and innovative game controller design that allows users to experience more effective and comfortable gameplay across various game genres. In split mode, it is particularly optimized for applications that require high precision, such as first-person shooter (FPS), strategy, and action games.

As the controller can be used in unified and split mode, it combines the benefits of both traditional game controllers and pointing device, such as mice. Additionally, users can easily switch between different control modes during gameplay, providing a more flexible gaming experience. In unified mode, users can play console games as if using a standard, two hand operated game controller. The split mode can be activated when more control and precision are needed. For example, during a game, when aiming or selecting an item from a menu, the game controller can be used in split mode and the second part can function as a mouse, allowing for precise movements on the screen. The first part can be used as a (one-hand operated) key board or as a one hand held and operated game controller.

Switching from unified mode in split mode (and back again) can be initiated automatically by splitting the first part from the second part, or coupling the parts, respectively.

The modular game controller may be provided as a right-handed version or a left handed version. In a right-handed version, the second part (i.e. the part acting as pointing device in split mode) is assigned to a right hand. In a left-handed version, the second part is assigned to a left hand.

In a particular aspect, the first part and/or second part may include at least one handle portion. These serve for gripping the game controller. In unified mode, the game controller may be gripped so that the respective handle portion rests in the user's palm or is partially enclosed by the user's palm. User input components that are provided on a surface pointing substantially upwards when being gripped may be mainly thumb controlled in unified mode. User input components that are provided on a surface of the game controller that faces away from the user may be mainly finger controlled in unified mode.

In split mode, the user input components provided on the first part on a surface pointing substantially upwards may be finger and/or thumb controlled, as when typing on a keyboard, in case the first part is being used as a keyboard.

The second part may be rotated about 90 degrees when being switched from a unified mode orientation to split mode orientation, thereby orienting the mouse sensor towards the surface to be tracked. User input components provided on the second part that are finger controlled in unified mode may remain finger controlled in split mode. Likewise, user input components provided on the second part that are thumb controlled in unified mode may remain thumb controlled in split mode.

It is understood that the function of the user input components may depend on the mode (split mode or unified mode). The respective user input component's function may remain the same or change, in case the mode is changed. In particular, at least two finger-operated user input components of the second part can serve as triggers in unified mode, for example, but as left or right mouse buttons in split mode.

For example, the first part may include as a user input component at least one of
- a key that is finger operable in unified mode;
- a key that is thumb operable in unified mode;
- a control stick, and/or
- touch sensitive surface

The term "key", in the context of user input components, refers to a input component that when being pressed causes a signal. The signal may then be linked to a specific command, character and/or the like. The term key is not linked to a specific key-structure, but includes mechanical keys (such as switches and buttons), capacitive sensing keys, inductive sensing keys, and/or the like.

In a particular aspect, the user input components of the first part includes at least one directional pad, comprising e.g. at least four buttons (up, down, left, right). It is to be understood, that a directional pad may be provided as 4-way rocker. Further, intermediate diagonals may be provided, as well as a centered (confirmation) button. Furthermore, the first part may include at least two trigger keys that may be finger-operated.

The second part may also include at least one user input component. The user input component(s) of the second part include(s) at least one of
- a key that is finger operable in unified mode and split mode;
- a key that is thumb operable in unified mode and split mode;
- a control stick;
- a scroll wheel, and/or
- touch sensitive surface.

The scroll wheel may be positioned on a surface pointing away from the user in unified mode, e.g. between adjacent finger-operated trigger keys.

In a particular aspect, at least one key (or at least two keys) may be structured as a one-way capacitive surface, wherein at least one key of the second part that is finger operable in unified mode and split mode may be structured as a one-way capacitive surface. This capacitive surface may e.g. be used for scrolling and may be operated with an index finger in unified mode and/or split mode.

Further, the first part and/or the second part may include at least one of the following sensors, which may be used to generate a user input for controlling video games:
- an accelerometer and/or a gyroscope for detecting change of an orientation of the controller, respectively the first and/or second part. An accelerometer allows to recognize gestures like swinging, shaking, or tilting the controller (respectively its parts). Therefore, additional user input functionality, e.g. for sports games, can be provided.
- a position sensor, such as an IR-sensor, that allows detecting the position and/or pointing direction of the game controller (respectively its parts) relative to a screen and/or game console.
- a microphone, allowing playing video games, such as karaoke and/or allowing voice control.

Further, the game controller may split asymmetrically along the first and/or second joint faces. In unified mode, the first and second joint faces are arranged opposite to each other, defining a joint face of the game controller.

In an example, the first part may be larger than the second part. Particularly, the larger first part may include at least two finger operable keys, at least one thumb operable directional pad and at least one control stick. The smaller second part may include at least two finger operable keys and optionally a thumb operable directional pad. As the first part is larger, it can be supported on a surface and can e.g. be used as a keyboard.

To prevent jiggling when placed on a surface, the first part may include a support element. The support element may be configured to support the first part in split mode on an underground structure. For example, the support element can provide an additional, e.g. third, support point for the first part, when being used in split mode. In an aspect, the support element may be hinged and/or extendable. Hence, it is possible to extend the element only when it is needed, for example in split mode. In unified mode, the element can be folded or retracted so that it does not hinder the user.

In a further aspect, the first coupling means may include at least one coupling component. The second coupling means may include at least one corresponding coupling component. The coupling component and the corresponding coupling component may be configured to engage with each other, to couple the first part to the second part. Additionally, or alternatively the first coupling means may include at least one electrical coupling component and the second coupling means may include at least one corresponding electrical coupling component. The electrical coupling component and the corresponding electrical coupling component may be configured to electrically couple the first part with the second part in unified mode. Hence, in unified mode, there may be data and/or energy transmission between the first part and the second part (unidirectional or bidirectional), via the electrical coupling components.

The coupling component and corresponding coupling component may include at least one protrusion (e.g. a rod) and at least one corresponding recess (e.g. a socket), at least one magnet, or other types of mechanical interlocking, such as a flexible locking system, a dovetail lock system, a bayonet-type connection, a tongue-and-groove system and/or the like. It is to be understood, that different coupling components may be provided.

In a particular aspect, the at least one coupling component is provided on a side surface of the first part (particularly the first joint face) and the corresponding coupling component is provided on a side surface of the second part (particularly the second joint face), wherein the side surfaces face each other in unified mode.

To secure the coupling between the first and second coupling means, a locking mechanism, such as a latch or locking button may be provided. This locking mechanism must be unlocked prior to decouple the first and second coupling means and splitting the first and second parts.

In a particular aspect, the coupling component and the corresponding coupling component may define a mating direction for coupling the first part to the second part. Particularly, the mating can be guided by the coupling component and the corresponding coupling component along the mating direction, thereby facilitating the coupling of the first and second part.

In a further aspect, the first part and/or the second part may include at least one energy storage, in particular a rechargeable battery. In case both parts include an energy storage, the parts can be operated independently.

Further, the first part and the second part may be configured for data and/or energy transmission between the first part and second part, when being operated in unified mode. Data and/or energy transmission may be achieved via the electrical coupling components, as described above. Further, data and/or energy transmission may be achieved without any galvanic connection between the first part and the second part, e.g. via an inductive coupling, a magnetic coupling or the like. For data transmission, optical communication (e.g. using the mouse sensor) and/or RF-communication (e.g. Bluetooth) and or the like could be used.

When operated in split mode, the first part and second part may be configured for data and/or energy transmission between the first part and second part. Data transmission can e.g. be achieved via a RF-communication. For energy transmission (and data transmission), a cable, such as an USB-cable, may be used.

Further, the modular game controller may comprise at least one cable connection port and/or a charging input and/or a wireless communication interface, a Bluetooth adapter and/or one or more USB connection ports. Hence, the game controller (particular its parts) could be recharged, updated or communicate with a game console.

Further, the second part may include at least one gliding surface area. This gliding surface area may be provided on a side surface of the second part, particularly on the second joint face, and may at least partially be covered by the first part, when the first part and the second part are mechanically coupled to one another (e.g. in unified mode). The mouse sensor may be arranged adjacent to the gliding surface area. Thus, an improved gliding on a surface is achieved, in case the second part is used as a pointing device. There may be multiple (at least two) gliding surface areas, and the mouse sensor may be arranged between these gliding surface areas.

Further, the modular game controller may include a mode detection sensor. The mode detection sensor serves for detecting, whether the modular game controller is operated in split mode or unified mode. The mode detection sensor may be a separate sensor, provided on the first and/or second part. Alternatively, the mode detection sensor may be integrally formed with the mouse sensor. In this case, the mouse sensor will be able to recognize the opposing surface of the first part to determine, that the game controller is used in unified mode.

The object is further achieved by a pointing device, which can be used as a second part of the modular game controller described above. Said pointing device includes a second coupling means to mechanically couple the pointing device to the first part of the modular game controller, so that the pointing device and the first part are operable in a unified mode as joint game controller. Further, the pointing device includes a joint face which is assigned to the second coupling means.

The pointing device further includes a mouse sensor, wherein the mouse sensor is positioned so as to be able to detect a surface being opposite to the joint surface of the pointing device. Particularly, the mouse sensor may be positioned on the joint face of the pointing device so as to be covered by the first part, when the first part and the pointing device are mechanically coupled to one another. It is to be understood, that the inventive pointing device can be configured as the second part, described above.

The object is further achieved by a one hand operated game controller for being used as a first part of the modular game controller, described above. The one hand operated game controller includes a first coupling means to mechanically couple the one hand operated game controller to the second part of the modular game controller, so that the one hand operated game controller and the second part are operable in a unified mode as joint game controller. It is to be understood, that the inventive one hand operated game controller can be configured as the first part, described above.

The object is further achieved by a game console system. The game console system includes at least one modular game controller as described above and a game console, being in communication, particularly wireless communication, with the at least one game controller.

Further, the system may include a screen (e.g. a TV-screen) for displaying a video game.

### Brief description of the figures

Further features and advantages will be apparent from the following description of exemplary embodiments, which are not to be understood as limiting, as well as the accompanying figures, to which reference is made.
- Figure 1: gives a schematic illustration, showing the use of the game controller in split mode;
- Figure 2: gives a schematic illustration, showing the use of the game controller in split mode in a different configuration;
- Figure 3: gives a schematic top view of a game controller in unified mode;
- Figure 4: gives a schematic top view of another game controller in unified mode;
- Figure 5: gives a schematic top view of yet another game controller in unified mode;
- Figure 6: gives a schematic top view of the game controller in split mode;
- Figure 7: gives a schematic top view of the first part of the game controller in split mode;
- Figure 8: gives a schematic perspective view of the first part of the game controller in split mode;
- Figure 9: gives a schematic top view of the second part of the game controller in split mode;
- Figure 10: gives a schematic bottom view of the second part of the game controller in split mode;
- Figure 11: gives a schematic top view of yet another game controller in unified mode, and
- Figure 12: gives a schematic view of a game console system.

### Detailed Description of the Invention

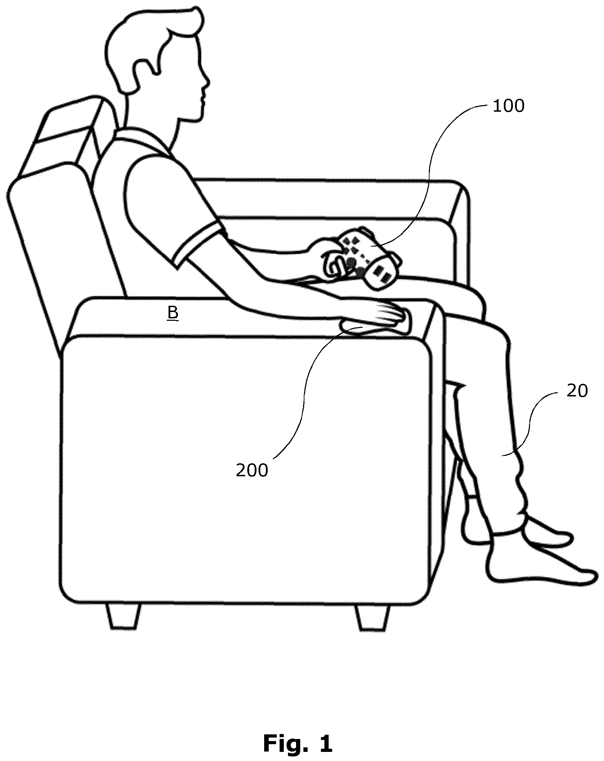

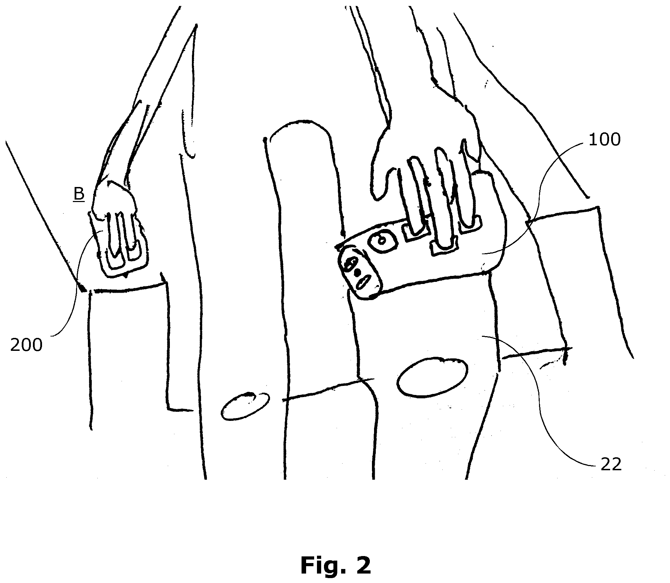

Figures 1 and 2 illustrate a representative usage of a modular game controller in split mode. The modular game controller 10 comprises a first part 100 and a second part 200. The first part 100 may be used as a one-hand operated game controller (as shown in Fig. 1), or may be used as one-hand operated keyboard (as shown in Fig. 2). In case being used as a keyboard, the first part 100 could be placed and supported on a surface, such as a user's 20 thigh 22.

The second part 200 includes a mouse sensor and is configured to be used as a pointing device, e.g. a mouse, in split mode. In this case the second part is oriented so that a mouse sensor faces and tracks a surface B. This surface B is a surface to be tracked, which is opposite to the second joint face A₂₀₀ of the second part 200.

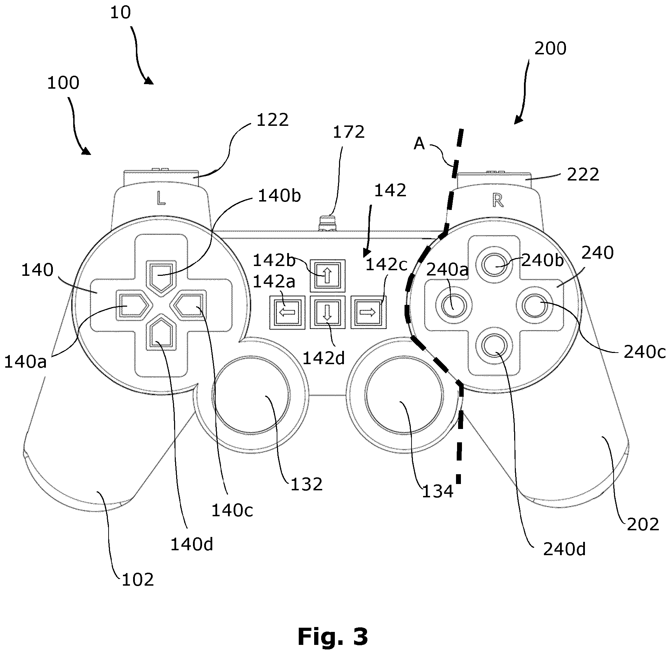

Alternatively, the modular game controller 10 can be operated in a unified mode, as shown in Figs. 3 to 5. In this unified mode, the game controller 10 can be operated with two hands. For entering the split mode, the user separates the modular game controller 10. In this split mode, the user may use the second part 200 as pointing device (e.g. as mouse) with his right hand while holding the other part, i.e. the first part 100, in the left hand to continue utilizing the user input components provided on the first part 100. It is to be understood, that the game controller could be designed for left handed people as well, in this case, the second part would be operated with the left hand and the first part with the right hand.

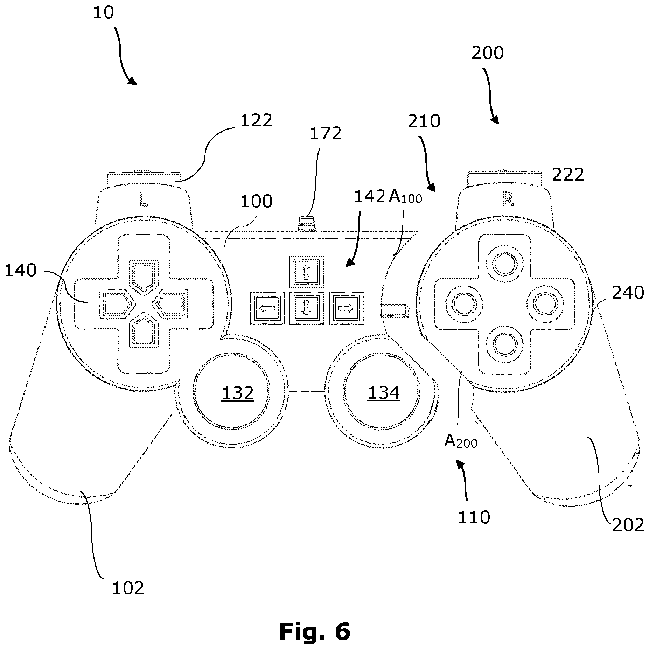

As best shown in Figs. 3 to 5, the modular game controller 10 comprises a first part 100 and a second part 200, which can be mechanically coupled via first and second coupling means, as shown in Fig. 6.

The first part 100 includes multiple user input components 122, 124, 132, 134, 140a-d, 142a-d, 144, 146, 148. Likewise, the second part 200 includes multiple user input components 222, 224, 240a-d and 242.

The user input components of the first part 100 include in the embodiments shown in Figs. 3 to 5 inter alia
- keys 122, 124 (also denoted as L1, L2 buttons) that are finger operable in unified mode, and
- keys 140a-d, 142a-d, 144, 146, 148 that are thumb operable in unified mode, and
- control sticks 132, 134.

The keys 140a-d and 142a-d may be arranged in respective operation sections 140, 142 and may from a directional pad. Further keys, such as a spacebar 144, a stop button 146 or a play button 148 may be provided. The user input components of the first part that are thumb operated in unified mode may be finger operated in split mode, in case the first part 100 is used as a keyboard.

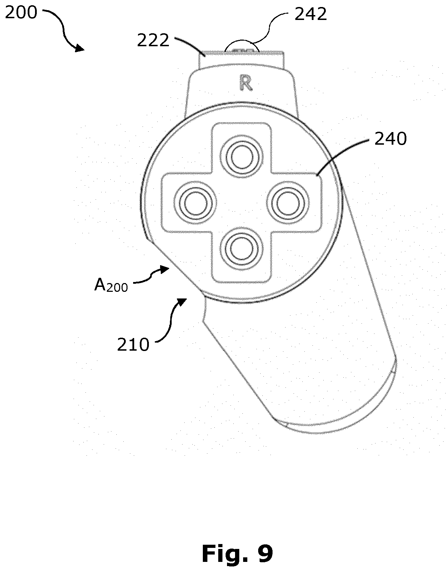

The user input components of the second part 200 include in the embodiments shown in Figs. 3 to 5 inter alia
- keys 222, 224 (also denoted as R1, R2 buttons) that are finger operable in unified mode and split mode
- keys 240a-d that are thumb operable in unified mode and split mode, and optionally
- a scroll wheel 242 (cf. Fig. 9).

The keys 240a-d may be arranged in an operation section 240 and may from a directional pad.

As shown, the modular game controller 10 may comprise various user input components. The term "user input components" refers to the buttons, triggers, joysticks, directional buttons, and sticks placed on the game controller that allow the user to issue desired commands during gameplay.

As will be apparent from Fig. 6, the modular game controller 10 can be used in two different modes. In unified mode (cf. Figs. 3-5), the modular game controller can be used like a traditional game controller (two-handed operation). In split mode (cf. Fig. 6), the first part 100 may serve as a keyboard or one hand operated game controller and the second part 200 serves as pointing device, particularly as a mouse. The first part 100 and the second part 200 can be used independently in split mode, depending on the game being played.

According to an aspect of the invention, the modular game controller 10 may include more than one, for example, two control sticks 132, 134. These control sticks 132, 134 may be positioned on the first part. According to another aspect (not shown), a first control stick may be positioned on the first part and a second control stick may be positioned on the second part.

Fig. 3 shows an embodiment of the invention. Particularly, a schematic top view of the modular game controller 10 in unified mode is shown. The first part 100 contains a left operation section 140. This operation section 140 is equipped with different user input components 140a-d, configured to allow the user to issue commands during the use of the game controller 10. Optionally, this section 140 may include additional user input components, e.g. buttons, of various shapes and functions.

In one embodiment of the invention, the first part 100 includes an L1 button 122, a left control stick 132, and an L2 button 124, enabling the user to provide additional inputs and/or commands.

The embodiment of the invention shown in the top view in unified mode in Figure 3 also includes a directional pad (keys 142a-d) in a middle section of the controller. The middle section may be located between the handle portions 102, 202 of the controller 10.

On the second part, a right operation section 240 may be provided, which contains user input components 240a-d, configured to allow the user to issue commands during the use of the game controller. The number and shapes of these user input components 240a-d, their symbols, functions, and names may vary.

Further, the second part may include an R1 button 222 and an R2 button 224 for the user to provide additional inputs and/or commands. The right control stick 134, which is to be operated with the right hand is provided on the first part.

The modular game controller 10 shown in Fig. 3 may be split along the joint face A, which is denoted as dashed line.

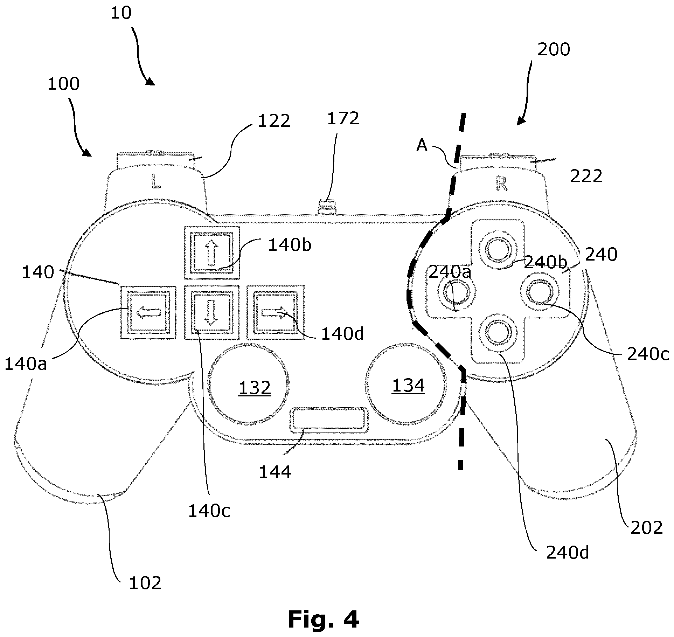

Fig. 4 shows a schematic top view of another embodiment of the modular game controller 10 in unified mode. In this alternative embodiment, the first part 100 contains both right and left control sticks 132, 134, directional buttons 140a-d, and, in addition, a spacebar 144. Thanks to this arrangement, the user can utilize all functions typically used while playing on standard computer keyboards in a compact keyboard structure when using the first part 100 in split mode.

For example, the spacebar 144 can be assigned a jump function. Thus, the user can press the spacebar 144 with his left thumb while keeping the index, middle, and ring fingers on the directional buttons 140a-d without lifting them, making the character jump. The spacebar 144 may also be included in other configurations of the game controller 10 seen in different figures or described in this specification. The spacebar 144 provides flexibility for the user to issue commands during gameplay, offering a more comfortable and customizable in-game experience.

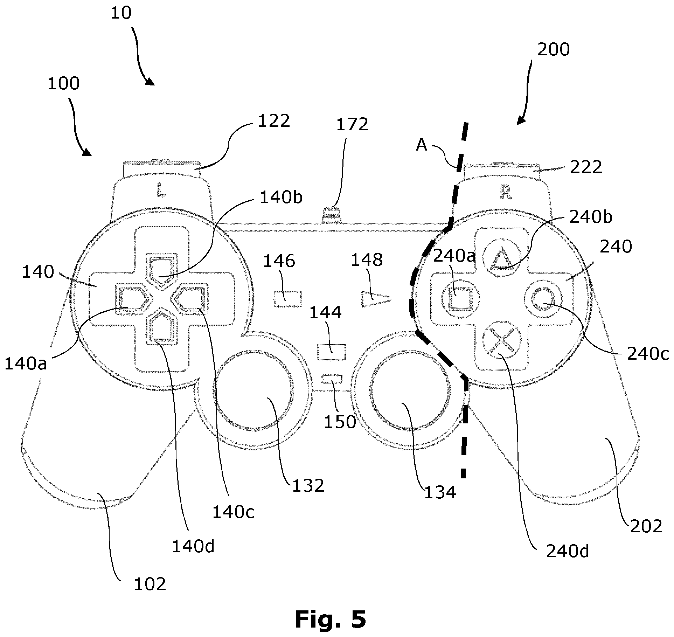

Fig. 5 shows a schematic top view of another embodiment of the modular game controller 10 in unified mode. Here, in the middle section keys such as a stop or pause key 146, a play key 148 and a space bar 144 are provided. Additionally, a display means 150, such as a status LED, is provided.

The modular game controller 10 as shown in any of Figs. 3 to 11 primarily includes a top surface 180, 280 with user input components, a bottom surface 182, 282 opposite the top surface, connection surfaces A₁₀₀, A₂₀₀ exposed during split mode use, and an outer surface 184, 284 surrounding the outer part of the game controller 10.

Additionally, the modular game controller, particularly the first part 100 and/or second part 200, may optionally include at least one cable connection port 172, a charging input, a Bluetooth adapter, a wireless charging module, one or more USB ports, or another type of connection connector, such as a cable connection port with a Bluetooth adapter or a cable connection port with a wireless charging module, etc., located on any part of the top surface 180, 280, bottom surface 182, 282, or outer surface 184, 284. These extra features allow the game controller 10 to be optionally used wired or wirelessly, and/or it can be charged via wired or wireless methods.

The first part 100 and the second part 200 of the modular game controller 10 may use the same or different connection methods to connect with a game console, a PC, or screen. For example, during split mode use, while the first part 100 is connected via a cable to the game console, PC or screen, the second part 200 may connect wirelessly e.g. through Bluetooth, and vice versa.

In one embodiment, the first part 100 and second part 200 may also be connected by a cable in split mode. In this arrangement, the first and second parts 100, 200 are mechanically split but still connected via a cable for data and/or energy transmission. This configuration allows features such as a battery compartment, charging module, or connection port to be located only on the first part 100, ensuring that the second part 200 remains compact and ergonomic while meeting charging or similar needs.

The game controller 10 and particularly the first and/or second part may contain a battery suitable for the preferred charging system. For example, the battery may be located in the first part 100 and/or the second part 200. In one embodiment, separate batteries may be found in both the first part 100 and the second part 200, and these batteries can be charged separately, or the entire game controller 10 can be charged through a single point via cable and/or wirelessly when in unified mode. Charging systems, battery systems, and features required to establish the connection between the game controller and the screen and/or game console are widely known and can be implemented using any system known in the art.

As shown in Fig. 6 the first part 100 includes a first coupling means 110 and a first joint face A₁₀₀. The second part 200 includes a second, corresponding coupling means 210 and a second joint face A₂₀₀. The first coupling means 110 and the second coupling means 210 are configured to mechanically couple the first part 100 to the second part 200, so that the first part 100 and the second part 200 are operable in the unified mode. In unified mode, the first joint face A₁₀₀ and the second joint face A₂₀₀ face each other. In split mode, the second joint face A₂₀₀ is configured to face a surface to be tracked.

If the first coupling means 110 and the second coupling means 210 are decoupled, as shown in Fig. 6, the first part 100 and the second part 200 are split from another to be operable in a split mode.

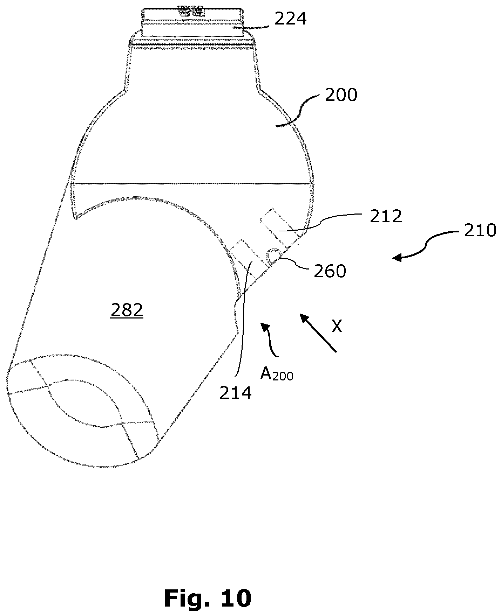

Further, the game controller 10 may split asymmetrically along the joint face A. The joint face A is defined by the first and second joint faces A₁₀₀, A₂₀₀, respectively by the first coupling means 110 and the second coupling means 210. As best seen in Fig. 10, The second part 200 includes a mouse sensor 260. The mouse sensor is positioned so as to be able to detect a surface being opposite to the joint surface A₂₀₀.

As shown, the mouse sensor 260 may be positioned on the second joint face A₂₀₀ of the second part. Alternatively, the mouse sensor may be positioned next to the second joint surface.

If being position on the second joint surface, the mouse sensor 260 may be covered by the first part 100, particularly the first joint face A₁₀₀ of the first part, when the first part 100 and the second part 200 are mechanically coupled to one another, i.e. in unified mode. In split mode, the second part 200 is used with the mouse sensor 260 facing downward towards a surface, e.g. of an armrest.

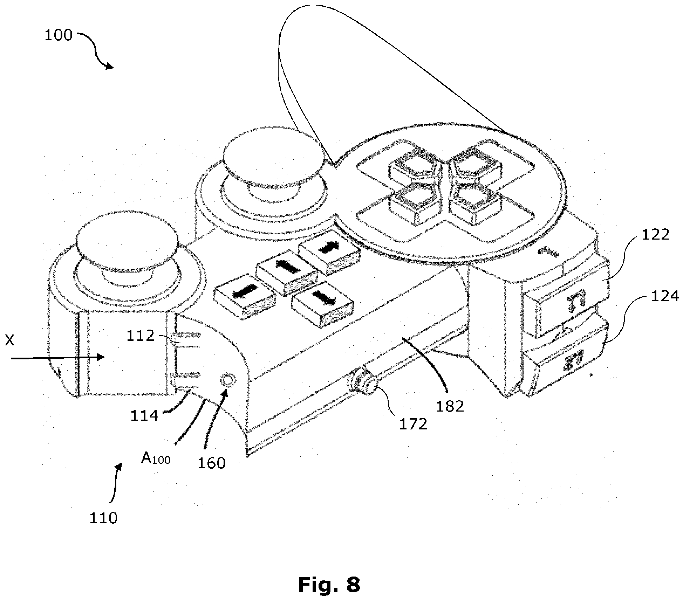

As e.g. shown in Fig. 8, the game controller 10 may include a mode detection sensor 160 to detect mode changes during use. When the game controller is separated by the user, the mode detection sensor 160 detects this change and causes the R1 button 222 and the R2 button 224 on the second part 200 to function as the left and right buttons as on a normal mouse, respectively. This provides an ergonomic gaming experience without the need for additional buttons on the controller. When the user switches the game controller from split mode to unified mode, the mode detection sensor 160 detects this change and restores the R1 button 222 and the R2 button 224 on the second part 200 to their functions in unified mode.

The mode detection sensor 160 mentioned here could be an optical sensor, e.g. a laser sensor. In an embodiment of the invention, the mode detection sensor may be integrally formed with the mouse sensor 260. In another embodiment of the invention, the mode detection sensor can be in the form of a button, a resistive sensor, an inductive sensor or a capacitive sensor.

In an aspect, the R1 button 222 and/or the R2 button 224 can be configured to include a one-way capacitive surface (touch pad). In a particular embodiment, only one key, e.g. the R1 button 222, is formed as or includes a one-way capacitive surface. By providing one-way capacitive surface(s), users can also have the scroll wheel function found on the second part 200, in addition to the known left and right mouse buttons. Alternatively, or additionally, a scroll wheel 242 can be provided (cf. Fig. 9). The scroll wheel 242 may be placed between the R1 button 222 and the R2 button 224.

As mentioned above, one of the main goals of this invention is to provide an ergonomic design. To achieve this, the modular game controller 10 includes two parts 100, 200. Both parts are designed in such a way that the user can easily input commands with each hand. When combined (unified mode), the game controller 10 is similar in size to existing game controllers and provides an ergonomic user experience. Based on this, the dimensions of the second part 200 of the game controller 10 designed for use as a pointing device in split mode may be as follows. The width (span) of the second part 200 may be in a range between 3 cm and 7 cm. Further, the length of the second part 200 may be between 8 cm and 16 cm, or between 8 cm and 14 cm, or between 8 cm and 12 cm. Even further, the thickness of the second part 200 may be in a range between 3 cm and 5 cm. It has shown, that these dimension provide for a comfortable and ergonomic controller and mouse usage.

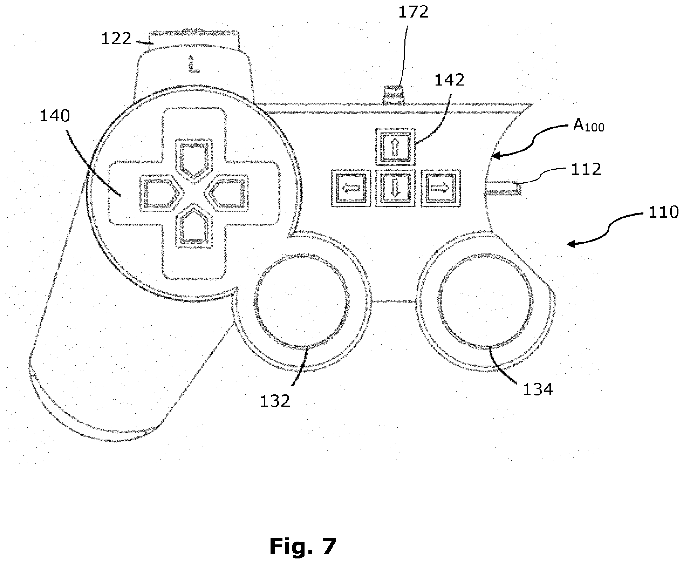

As shown in Figs. 7 and 8 the first part 100 includes a first coupling means 110, and as shown in Figs. 9 and 10 the second part 200 includes a second, corresponding coupling means 210. The first coupling means 110 and the second coupling means 210 are configured to mechanically couple the first part 100 to the second part 200, so that the first part 100 and the second part 200 are operable in a unified mode. Further, the first coupling means 110 and the second coupling means 210 can be decoupled so that the first part 100 and the second part 200 are split from another to be operable in a split mode. In the embodiment shown in Figs. 7 and 8 the first coupling means 110 includes two coupling components 112, 114. These are formed as protrusions or rods. The second coupling means 210 includes corresponding coupling components 212, 214. These are formed as recesses or sockets. The coupling components 112, 114 and the corresponding coupling components 212, 214 are configured to engage with each other, to couple the first part 100 to the second part 200.

Further, the coupling component 112, 114 and the corresponding coupling component 212, 214 define a mating direction X for coupling the first part 100 to the second part 200.

In a particular aspect, the first coupling means 110 may include at least one electrical coupling component. This electrical coupling component may be integrally formed with the coupling components 112, 114. The second coupling means 210 may include at least one corresponding electrical coupling component. This corresponding electrical coupling component may be integrally formed with the corresponding coupling components 212, 214. The electrical coupling component and the corresponding electrical coupling component may be configured to electrically couple the first part 100 with the second part 200 in unified mode to allow for data and/or energy transmission.

In different embodiments of the invention, the coupling between the first part 100 and the second part 200 can be provided through other or additional mechanical coupling components, such as a flexible locking system, dovetail locks, bayonet-type connections, or tongue-and-groove systems.

Further the joint surfaces A₁₀₀ and A₂₀₀ (also denoted as connection surfaces) can be shaped according to a preferred form of the coupling means 110, 210. In different embodiments of the invention, other connection forms, such as magnetic connections, may be used instead of mechanical connections. Optionally, a connection rod and socket made from magnetic materials, or magnetic versions of dovetail lock systems, bayonet-type connections, tongue-and-groove systems, and similar mechanisms can also be utilized.

In general, the game controller 10 can be split in two by the user during use, and after the split, the user input components (e.g., buttons, triggers, sticks) on the first part 100 may continue to function in the same way. The second part 200 configured for use as a mouse 200 can then be used as a pointing device, e.g. a mouse, on a surface once the mouse sensor 260 is positioned on a lower surface. During use as a mouse, the user input components (e.g., buttons, triggers, sticks) on the second part 200 may have the functions of various buttons found on an advanced mouse.

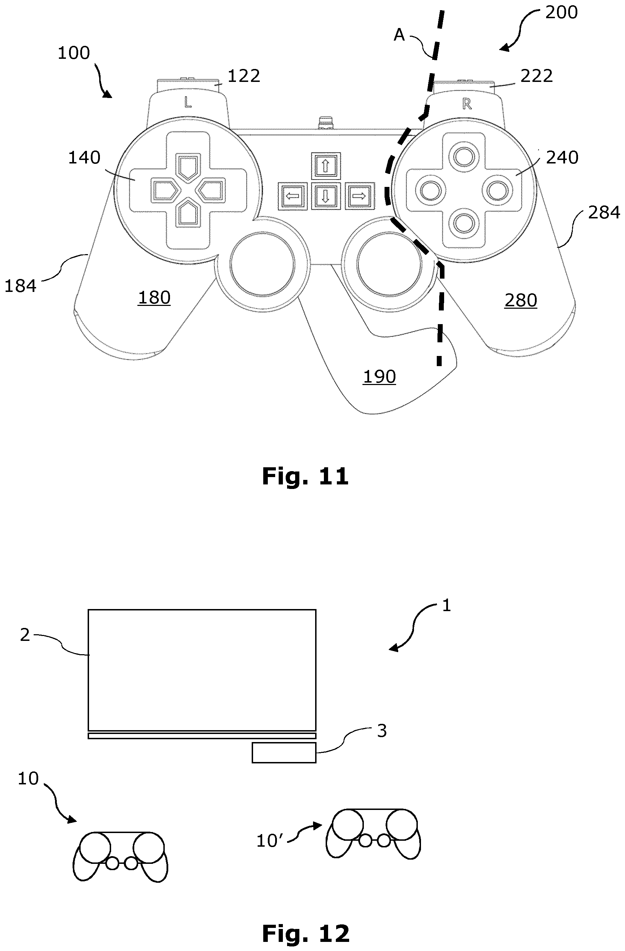

Fig. 11 gives a schematic top view of yet another game controller 10 in unified mode. The first part 100 may be supported on a surface, e.g. a user's thigh, and can be used as a keyboard. To prevent jiggling when placed on said surface, the first part 100 may include a support element 190. The support element 190 is configured to support the first part 100 in split mode on an underground structure. In an aspect, the support element 190 may be hinged and/or extendable. Hence, it is possible to extend the element 190 only when it is needed, for example in split mode. In unified mode, the element can be folded or retracted so that it does not hinder the user.

Fig. 12 shows a game console system 1 containing at least one modular game controller 10, 10 and a game console 3. The game console 3 being configured to communicate, e.g. wirelessly, with the at least one modular game controller 10, 10'. The term "game console" refers to an electronic device that allows video games to be played. In general, game consoles run video games and process data such as graphics, sound, and user control inputs. The game console 3 compatible with the invention can be connected to an external display device such as a television screen 2 or monitor.

### List of reference signs

- 1: System
- 2: Screen
- 3: Game Console
- 10: Modular game controller
- 10': Modular game controller
- 20: user
- 22: thigh
- 100: first part (one hand operated game controller in split mode)
- 102: handle portion
- 110: first coupling means
- 112: coupling protrusion
- 114: coupling protrusion
- 122: user input component (L1 button)
- 124: user input component (L2 button)
- 132: user input component (Left control stick)
- 134: user input component (right control stick)
- 140: first operation section
- 140a: user input component (key)
- 140b: user input component (key)
- 140c: user input component (key)
- 140d: user input component (key)
- 142: second operation section
- 142a: user input component (key)
- 142b: user input component (key)
- 142c: user input component (key)
- 142d: user input component (key)
- 144: user input component (spacebar)
- 146: user input component (stop)
- 148: user input component (play)
- 150: display means (e.g. status LED)
- 160: mode detection sensor
- 172: cable connection port
- 180: top surface of first part
- 182: bottom surface of first part
- 184: outer surface of first part
- 190: support element
- 200: second part (used as pointing device in split mode)
- 202: handle portion
- 210: second, corresponding coupling means
- 212: coupling recess
- 214: coupling recess
- 222: user input component (R1 button)
- 224: user input component (R2 button)
- 240: first operation section
- 240a: user input component (key)
- 240b: user input component (key)
- 240c: user input component (key)
- 240d: user input component (key)
- 242: scroll wheel
- 260: mouse sensor
- 280: top surface of second part
- 282: bottom surface of second part
- 284: outer surface of second part
- A: joint face
- A₁₀₀: joint face of first part (connection surface)
- A₂₀₀: joint face of second part (connection surface)
- B: surface (e.g. of an armrest)

## Claims

1. A modular game controller (10) for video gaming, the game controller (10) comprising
a first part (100) and a second part (200), wherein the first part (100) includes a first coupling means (110) and a first joint face (A100) being assigned to the first coupling means (100), and wherein the second part (200) includes a second, corresponding coupling means (210) and being assigned to the second coupling means (210), wherein
the first coupling means (110) and the second coupling means (210) are configured to mechanically couple the first part (100) to the second part (200) along the first and second joint faces (A₁₀₀, A₂₀₀), so that the first part (100) and the second part (200) are operable in a unified mode, and wherein
the first coupling means (110) and the second coupling means (210) can be decoupled so that the first part (100) and the second part (200) are split from another to be operable in a split mode, wherein
the first part (100) includes at least one user input component (122, 124, 132, 134, 140a-d, 142a-d, 144, 146, 148) and is configured to be used as a one hand operated game controller in split mode, and wherein
the second part (200) includes a mouse sensor (260) and is configured to be used as a pointing device in split mode, wherein
the mouse sensor (260) is positioned so as to be able to detect a surface being opposite to the second joint surface (A₂₀₀).

2. The modular game controller (10) according to claim 1, wherein the mouse sensor (260) is positioned on the second part (200) so as to be covered by the first part (100), when the first part (100) and the second part (200) are mechanically coupled to one another.

3. The modular game controller (10) according to claim 1 or 2, wherein the game controller splits asymmetrically along the first and/or second joint face (A₁₀₀, A₂₀₀).

4. The modular game controller (10) according to any one of claims 1 to 3, wherein
the first coupling means (110) includes at least one coupling component (112, 114) and wherein the second coupling means (210) includes at least one corresponding coupling component (212, 214), wherein
the coupling component (112, 114) and the corresponding coupling component (212, 214) are configured to engage with each other, to couple the first part (100) to the second part (200) and/or wherein
the first coupling means (110) includes at least one electrical coupling component and wherein the second coupling means (210) includes at least one corresponding electrical coupling component, wherein the electrical coupling component and the corresponding electrical coupling component are configured to electrically couple the first part (100) with the second part (200) in unified mode.

5. The modular game controller (10) according to claim 4, wherein the coupling component (112, 114) and the corresponding coupling component (212, 214) define a mating direction (X) for coupling the first part (100) to the second part (200).

6. The modular game controller (10) according to any one of claims 1 to 5, wherein
the user input components of the first part (100) include at least one of
a key (122, 124) that is finger operable in unified mode;
a key (140a-d, 142a-d, 144, 146, 148) that is thumb operable in unified mode;
a control stick (132, 134), and/or
touch sensitive surface; and/or wherein
the second part (200) includes at least one user input component, wherein
the user input components of the second part (200) include at least one of
a key (222, 224) that is finger operable in unified mode and split mode;
a key (240a-d) that is thumb operable in unified mode and split mode;
a control stick;
a scroll wheel (242), and/or
touch sensitive surface.

7. The modular game controller (10) according to claim 6, wherein at least one key may be structured as a one-way capacitive surface, and wherein at least one key of the second part (200) that is finger operable in unified mode and split mode may be structured as a one-way capacitive surface.

8. The modular game controller (10) according to any one of claims 1 to 7, wherein
the first part (100) and second part (200) are configured for data and/or energy transmission between the first part (100) and second part (200) when being operated in unified mode, and/or wherein
the first part (100) and second part (200) are configured for data and/or energy transmission between the first part (100) and second part (200) when being operated in split mode.

9. The modular game controller (10) according to any one of claims 1 to 8, wherein
the modular game controller (10) comprises at least one cable connection port (172) and/or a charging input and/or a wireless communication interface, a Bluetooth adapter and/or one or more USB connection ports; and/or wherein
the first part (100) and the second part (200) are connected by a cable in split mode.

10. The modular game controller (10) according to any one of claims 1 to 9, wherein
the mouse sensor (260) includes a laser sensor and/or an optical sensor, and/or wherein
the second part (200) includes at least one gliding surface area, and wherein the mouse sensor (260) is arranged adjacent to the gliding surface area.

11. The modular game controller (10) according to any one of claims 1 to 10, the game controller (10) further including a mode detection sensor (160), wherein the mode detection sensor may be integrally formed with the mouse sensor.

12. The modular game controller (10) according to any one of claims 1 to 11, wherein the first part (100) includes a support element (190), the support element (190) being configured to support the first part (100) in split mode on an underground structure, wherein the support element (190) may be hinged and/or extendable.

13. A pointing device (200) for being used as a second part (200) of a modular game controller (10) according to any one of claims 1 to 12, the pointing device (200) including
a second coupling means (210) to mechanically couple the pointing device (200) to a first part (100) of the modular game controller (10), so that the pointing device (200) and the first part (100) are operable in a unified mode as joint game controller (10); wherein
the pointing device further includes a joint face (A₂₀₀) being assigned to the second coupling means (210), and wherein
the pointing device (200) further includes a mouse sensor (260), wherein the mouse sensor (260) is positioned so as to be able to detect a surface being opposite to the joint surface (A₂₀₀).

14. A one hand operated game controller (100) for being used as a first part (200) of a modular game controller (10) according to any one of claims 1 to 12, the one hand operated game controller (100) including
a first coupling means (110) to mechanically couple the one hand operated game controller (100) to a second part (200) of the modular game controller (10), so that the one hand operated game controller (100) and the second part (200) are operable in a unified mode as joint game controller (10).

15. A game console system (1) containing at least one modular game controller (10) according to any one of claims 1 to 12 and a game console (3), the game console being configured to communicate with the at least one modular game controller.
